# EUROPÄISCHE PATENTSCHRIFT

(11) **EP 1 898 195 B1**
(45) Veröffentlichungstag und Bekanntmachung des Hinweises auf die Patenterteilung: **14.07.2010**
(21) Anmeldenummer: 07115499.1
(22) Anmeldetag: 03.09.2007
(51) Int. Cl.: G01K 7/04, B29C 45/78

(54) **Temperatursensor mit bearbeitbarer Front**
Temperature sensor with processable front
Capteur de température doté d'une face pouvant être traitée

(30) Priorität: 06.09.2006 CH 14242006
(43) Veröffentlichungstag der Anmeldung: 12.03.2008
(73) Patentinhaber: Kistler Holding AG, 8408 Winterthur (CH)
(72) Erfinder: Pletscher, Ernst, 8460, Marthalen (CH); Waser, Max, 8335, Hittnau (CH)

(56) Entgegenhaltungen:
- WO-A2-2004/052613
- DE-A1- 19 709 609
- US-A- 4 251 908

## Beschreibung

### Technisches Gebiet

Die Erfindung betrifft einen Temperatursensor mit einer Sensorspitze und einer Front, zum Messen der Temperatur von Werkzeuginnenwänden, insbesondere von Spritzgiesswerkzeug-Innenwänden, wobei die Sensorspitze durch Abtragen von Material an der Front bis zu einer Bearbeitungstiefe bearbeitbar ist, gemäss dem Oberbegriff des ersten Patentanspruchs.

### Stand der Technik

Temperatursensoren zum Messen der Temperatur von Werkzeuginnenwänden von Spritzgiesswerkzeugen sind bekannt. Sie dienen der Steuerung von Spritzgiessprozessen und sind auch als kombinierte Druck-Temperatursensoren erhältlich. Für solche Anwendungen werden in der Regel Thermoelemente verwendet, weil sie eine viel kürzere Ansprechzeit haben als andere Temperatursensoren. Thermoelemente bestehen aus zwei Thermodrähten verschiedener Materialien. Bei einem Thermoelement des Typs K beispielsweise besteht ein Thermodraht aus Nickelchrom, der andere aus Nickel. Die Ansprechzeit eines Thermoelementes hängt von der Masse des Verbindungspunktes ab, welcher die beiden Thermodrähte verbindet.

Da die Fronten dieser Sensoren einen Teil der Werkzeuginnenwand darstellen, sind ihre Konturen am Spritzgussteil sichtbar. Insbesondere werden Unebenheiten, Absätze oder Spalten zu den Bohrungen in den Werkzeugen, in denen solche Sensoren eingesetzt werden, auf den Teilen abgebildet, was als mangelhaft beurteilt wird.

Die Fronten von Drucksensoren sind in der Regel bearbeitbar. In eine Bohrung mit möglichst wenig Spiel wird ein solcher Sensor so tief eingesetzt, dass er allseitig mindestens den Rand der Kavität erreicht. Danach wird die Sensorfront durch Abtragen von Material bearbeitet, bis die Front mit der angrenzenden Kavitätsinnenwand plan ist.

Es gibt auch Temperatursensoren für diese Anwendungen mit bearbeitbarer Front. Ein solcher Sensor ist in der WO 2004/052613 angegeben. Dieser Temperatursensor wird im Frontbereich zusammengepresst (gekrimpt), so dass die einzelnen Thermodrähte des Thermoelementes fest mit der darum herum liegenden Sensorspitze in Kontakt sind, was für eine zuverlässige Messung eines Thermoelementes notwendig ist. Der Aussenbereich der Sensorspitze wird aber durch das Pressen beim Krimpvorgang beschädigt, was sich nachteilig auf das möglichst nahtlose Einfügen in die Bohrung des Werkzeuges auswirkt.

### Darstellung der Erfindung

Es stellt sich nun die Aufgabe der vorliegenden Erfindung, einen Temperatursensor mit bearbeitbarer Front eingangs erwähnter Art anzugeben, welcher keine mechanische Beschädigung im Aussenbereich der Sensorspitze aufweist.

Die Aufgabe wird gelöst durch die Kennzeichen des unabhängigen Patentanspruchs. Weitere bevorzugte Ausführungsformen sind den Unteransprüchen zu entnehmen.

Die der Erfindung zugrunde liegende Idee besteht darin, dass beim erfindungsgemässen Temperatursensor jeder Thermodraht eines Thermoelements, der an die Front geführt ist, bis zu einer Tiefe, die grösser ist als die gesamte Bearbeitungstiefe hinter der Front 3, mit der Sensorspitze verschweisst ist.

### Kurze Beschreibung der Zeichnungen

Im Folgenden wird die Erfindung unter Beizug der Zeichnungen näher erklärt. Es zeigen
- Fig. 1: eine schematische Darstellung im Schnitt eines Spritzgiesswerkzeuges mit einem eingebauten Temperatursensor;
- Fig. 2: eine schematische Darstellung einer Sensorspitze im Schnitt nach dem Stand der Technik;
- Fig. 3: eine schematische Darstellung einer erfindungsgemässen Sensorspitze im Schnitt;
- Fig. 4: eine schematische Darstellung einer erfindungsgemässen Sensorspitze im Schnitt in einer alternativen Ausführungsform.

### Wege zur Ausführung der Erfindung

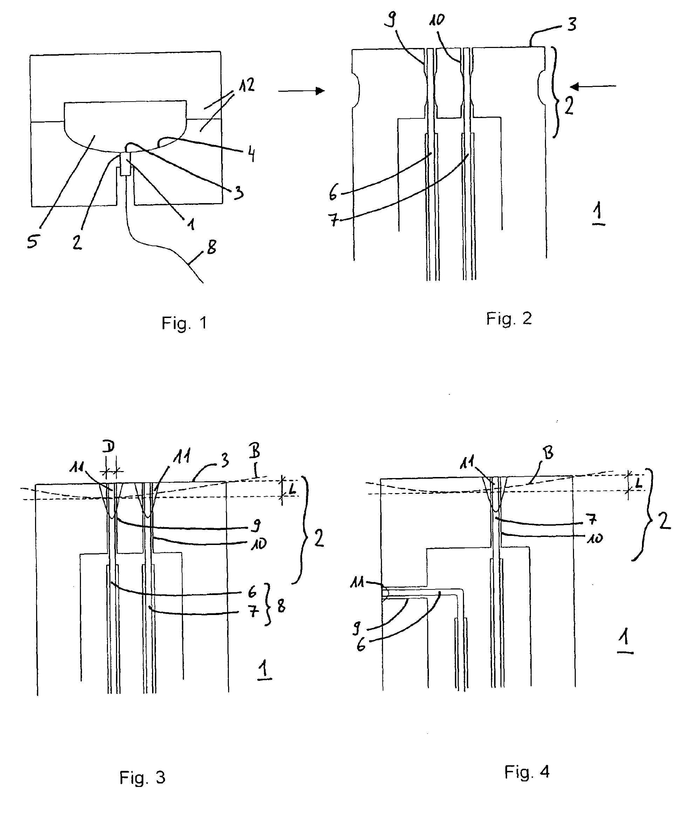

Fig. 1 zeigt eine typische Einbausituation des beanspruchten Sensors. Sie zeigt eine schematische Darstellung im Schnitt eines zweiteiligen Spritzgiesswerkzeuges 12 mit einer Werkzeuginnenwand 4, welche eine Kavität 5 umgibt. Angrenzend an diese Werkzeuginnenwand 4 ist ein Sensor 1 mit einem Thermoelement 8 eingebaut, welcher eine Sensorspitze 2 umfasst, an dessen Front 3 die Werkzeuginnenwand 4 angrenzt.

Die Fig. 2 zeigt eine schematische Darstellung einer Sensorspitze 2 im Schnitt nach dem Stand der Technik, wie sie in der WO 2004/052613 beschrieben ist. Zwei Thermodrähte 6, 7 werden in zwei Bohrungen 9, 10 an die Front 3 der Sensorspitze 2 geführt und in einem Bereich dieser Bohrungen 9, 10 durch Krimpung mit der Sensorspitze 2 verbunden. Der Bereich zwischen den Pfeilen in der Fig. 2 stellt den Krimpbereich dar. Dieses Verfahren ermöglicht eine nachträgliche Bearbeitung der Front 3 durch den Anwender. Leider wird aber der Aussenbereich der Sensorspitze durch das Pressen beim Krimpvorgang beschädigt, was sich nachteilig auf das möglichst nahtlose Einfügen in die Bohrung des Werkzeuges auswirkt.

Fig. 3 zeigt eine schematische Darstellung einer erfindungsgemässen Sensorspitze 2 eines Temperatursensors 1 im Schnitt. Die Sensorspitze 2 besteht normalerweise aus einem geeigneten Stahl. Die Bezugszeichen sind in allen Figuren beibehalten. So umfasst auch diese Sensorspitze 2 zwei Bohrungen 9, 10, in welchen zwei Thermodrähte 6, 7 eines Thermoelements 8 bis zur Front 3 der Sensorspitze 2 geführt sind. Ein solcher Temperatursensor ist zum Messen von Temperaturen von Werkzeuginnenwänden 4, insbesondere von Spritzgiesswerkzeug-Innenwänden, geeignet. Erfindungsgemäss ist jeder der Thermodrähte 6, 7, der an die Front 3 geführt ist, bis zu einer Tiefe, die grösser als die gesamte Bearbeitungstiefe L hinter der Front 3 ist, mit der Sensorspitze 2 in einem Verschweissungsbereich 11 verschweisst. Dank dieser tiefen und sicheren Verschweissung 11 ist die Sensorspitze 2 zum nachträglichen Anpassen der Front 3 an die Werkzeuginnenwand 4 durch Abtragen von Material an der Front 3 bis zur Bearbeitungstiefe L bearbeitbar. Die gestrichelte Linie B stellt ein Beispiel einer neuen Front nach der Bearbeitung dar. Selbst nach Abtragen von Material an der Front 3 bis zur Bearbeitungstiefe L ist der verbleibende Verschweissungsbereich 11 zwischen jedem der Thermodrähte 6, 7 und der Sensorspitze 2 noch genügend gross, um die erforderliche Verbindung von den Thermodrähten 6, 7 zur Sensorspitze 2 zu gewährleisten. Dadurch ist eine korrekte Temperaturmessung des Thermoelements 8 sichergestellt.

Vorzugsweise werden beide Thermodrähte 6, 7, wie in der Fig. 3 dargestellt, an die Front 3 geführt. In der Fig. 4 ist jedoch eine alternative Ausführungsform eines erfindungsgemässen Sensors 1 dargestellt, bei der nur ein Thermodraht 7 an die Front 3 geführt wird, während der andere Thermodraht 6 beispielsweise seitlich an die Oberfläche der Sensorspitze 2 geführt ist. Bei dieser Anordnung besteht die Sensorspitze 2 vorzugsweise aus demselben Material wie der Thermodraht 6, der nicht an die Front 3 geführt ist, also beispielsweise aus einer Nickel-Chrom Legierung oder aus Nickel, wenn ein Thermoelement 8 Typ K verwendet wird. Dadurch wird die Ansprechzeit verkürzt, da die beiden Materialien der Thermodrähte 6, 7 an dem einen Verschweissungsbereich 11 an der Front 3 zusammenkommen. Eine Verschweissung 11 an dieser Stelle erfordert lediglich eine gute Verbindung mit der Sensorspitze. Eine zusätzliche Tiefe der Schweissung ist nicht erforderlich, da an dieser Stelle kein Material abgetragen werden muss.

Die Verschweissungen 11 an der Front 3 der Sensorspitze 2 von Fig. 3 und 4 werden vorzugsweise an jedem Thermodraht 6, 7 einzeln durchgeführt. Die Durchführung der Verschweissung ist sehr schwierig, insbesondere bei sehr kleinen Sensoren 1, da diese bei der Verschweissung durch Überhitzung leicht zerstört werden können. In der Regel sind die Abstände der Thermodrähte 6, 7 bezogen auf ihre Mitten etwa 0.5mm, während die Dicke der Front 3 beispielsweise 1-4 mm aufweist. Die Durchmesser der Thermodrähte 6, 7 sind typischerweise zwischen 0.1 und 0.2mm.

Die Bearbeitungstiefe L ist mindestens 0.2mm, vorzugsweise mindestens 0.5mm dick. Diese Dicke reicht in den meisten Fällen aus, um die Front 3 an die erforderliche Kontur der Werkzeuginnenwand 4 anzupassen.

Die Schweissungen finden ohne Zufügen von Material statt. Dadurch wird vermieden, dass die Front 3 nach der Verschweissung noch nachbearbeitet werden muss, was ein zusätzlicher Aufwand bedeuten würde. Vorzugsweise werden die Thermodrähte mittels Elektronenstrahlschweissen oder Laserschweissen verschweisst. Da beim Elektronenstrahlschweissen weniger Hitze erzeugt wird und tiefer geschweisst werden kann, ohne das Werkstück zu überhitzen, ist dieses Verfahren das bevorzugte.

Die besten Resultate werden erzielt, wenn das Spiel der Thermodrähte 6, 7 in den Bohrungen 9, 10 minimal ist. Bezogen auf den Durchmesser D dieser Bohrungen 9, 10 sollte das Spiel höchstens 0.02, vorzugsweise höchstens 0.01mm betragen.

Der Verschweissungsbereich 11 ist in Fig. 3 und 4 dargestellt. Jede Verschweissung 11 verbindet gezielt einen Thermodraht 6, 7 mit der Umgebung der entsprechenden Bohrungen 9, 10. Im Schnittbild eines erfindungsgemässen Sensors 1 lassen sich diese einzelnen Verschweissungsbereiche 11 jedes Thermodrahtes 6, 7 sehr gut erkennen. Sie ragen deutlich über die vorgegebene Bearbeitungstiefe L hinaus. Sollte eine Front 3 durch den Anwender bis zu einer Bearbeitungslinie B, welche bis in die Tiefe L führen darf, abgetragen werden, ist eine sichere Verbindung der Thermodrähte 6, 7 mit der Sensorspitze 2 nach wie vor gewährleistet. Eine einzelne Schweissung, welche beide beabstandeten Thermodrähte 6, 7 in einer einzigen Schweissung 11 verbinden würde, könnte die Qualität des Sensors 1 nicht gewährleisten.

Damit der Sensor 1, nachdem er durch den Benutzer fertig nachbearbeitet wurde, nach einem späteren Ausbau wieder in derselben Orientierung eingesetzt werden kann, ist der Sensor 1 vorzugsweise mit einer nicht dargestellten Drehsicherung ausgerüstet.

Ein erfindungsgemässer Sensor 1 der oben beschriebenen Art lässt sich auch als kombinierter Temperatur-Drucksensor herstellen.

### Bezugszeichenliste

- 1: Sensor
- 2: Sensorspitze
- 3: Front
- 4: Werkzeuginnenwand
- 5: Kavität
- 6: Thermodraht
- 7: Thermodraht
- 8: Thermoelement
- 9: Bohrung
- 10: Bohrung
- 11: Verschweissung, Verschweissungsbereich
- 12: Werkzeug

- L: Bearbeitungstiefe
- D: Durchmesser
- B: Frontlinie nach einer Bearbeitung

## Patentansprüche

1. Temperatursensor mit einer Sensorspitze (2) und einer Front (3) zum Messen von Temperaturen von Werkzeuginnenwänden (4), insbesondere von Spritzgiesswerkzeug-Innenwänden, wobei die Sensorspitze (2) zum nachträglichen Anpassen der Front (3) an die Werkzeuginnenwand (4) durch Abtragen von Material an der Front (3) bis zu einer Bearbeitungstiefe (L) bearbeitbar ist, umfassend zwei Thermodrähte (6, 7) eines Thermoelementes (8), wobei mindestens ein, vorzugsweise beide Thermodrähte (6, 7) in je einer Bohrung (9, 10) durch die Sensorspitze (2) bis zur Front (3) geführt sind, **dadurch gekennzeichnet, dass** jeder Thermodraht (6, 7), der an die Front (3) geführt ist, in einem Verschweissbereich (11) bis zu einer Tiefe, die grösser ist als die gesamte Bearbeitungstiefe L hinter der Front (3), mit der Sensorspitze (2) verschweisst ist.

2. Sensor nach Anspruch 1, **dadurch gekennzeichnet, dass** beide Thermodrähte (6, 7) an die Front (3) geführt sind.

3. Sensor nach Anspruch 1, **dadurch gekennzeichnet, dass** genau einer der Thermodrähte (7) an die Front (3) geführt ist und der andere Thermodraht (6) an einer anderen Stelle als der Front (3) mit der Sensorspitze (2) verbunden ist.

4. Sensor nach Anspruch 3, **dadurch gekennzeichnet, dass** die Sensorspitze (2) aus demselben Material besteht wie der Thermodraht (6), der nicht an die Front (3) geführt ist.

5. Sensor nach Anspruch 1 oder 2, **dadurch gekennzeichnet, dass** die Bearbeitungstiefe (L) mindestens 0.2 mm, vorzugsweise mindestens 0.5 mm dick ist.

6. Sensor nach einem der Ansprüche 1 bis 5, **dadurch gekennzeichnet, dass** die Schweissung ohne Zufügen vom Zusatzmaterial, vorzugsweise mittels Elektronenstrahlschweissen oder mittels Laserschweissen, entstanden ist.

7. Sensor nach einem der vorhergehenden Ansprüche, **dadurch gekennzeichnet, dass** jeder Thermodraht (6, 7), der an die Front (3) geführt ist, einzeln mit der Sensorspitze 2 verschweisst ist.

8. Sensor nach einem der vorhergehenden Ansprüche, **dadurch gekennzeichnet, dass** das Spiel der Thermodrähte (6, 7) in den Bohrungen (9, 10) an der Front (3) höchstens 0.02mm, vorzugsweise höchstens 0.01mm im Durchmesser D beträgt.

9. Sensor nach einem der vorhergehenden Ansprüche, **gekennzeichnet durch** eine Drehsicherung für den Einbaumechanismus in ein Werkzeug (12).

10. Sensor nach einem der vorhergehenden Ansprüche, **dadurch gekennzeichnet, dass** der Sensor ein kombinierter Temperatur-Drucksensor ist.

## Claims

1. A temperature sensor having a sensor tip (2) and a front (3) for measuring temperatures of tool inner walls (4), particularly of injection molding tool inner walls, wherein the sensor tip (2) is processable for subsequent fitting of the front (3) to the tool inner wall (4) by removing of material at the front (3) up to a processing depth (L), comprising two thermocouple wires (6, 7) of a thermocouple (8) wherein at least one of the and preferably both thermocouple wires (6, 7) are each guided in a bore (9, 10) through the sensor tip (2) up to the front (3) **characterized in that** each thermocouple wire (6, 7) guided to the front (3) is welded to the sensor tip (2) in a welding area (11) up to a depth which is larger than the total processing depth L behind the front (3).

2. A sensor according to claim 1 **characterized in that** both thermocouple wires (6, 7) are guided to the front.

3. A sensor according to claim 1 **characterized in that** exactly one of the thermocouple wires (7) is guided to the front (3) and the other thermocouple wire (6) is connected to the sensor tip (2) at a site different from the front (3).

4. A sensor according to claim 3 **characterized in that** the sensor tip (2) is made from the same material as the thermocouple wire (6) which is not guided to the front (3) .

5. A sensor according to claim 1 or 2 **characterized in that** the processing depth (L) is at least 0.2 mm, preferably at least 0.5 mm thick.

6. A sensor according to any of the claims 1 to 5 **characterized in that** the welding is made without adding any additional material, preferably by means of electron beam welding or by laser beam welding.

7. A sensor according to any of the preceding claims **characterized in that** each thermocouple wire (6, 7) guided to the front is welded to the sensor tip (2) individually.

8. A sensor according to any of the preceding claims **characterized in that** the play of the thermocouple wires (6, 7) in the bores (9, 10) at the front (3) is at most 0.02 mm, preferably at most 0.01 mm in the diameter D.

9. A sensor according to any of the preceding claims **characterized in** having a rotation lock for the insertion mechanism into a tool (12).

10. A sensor according to any of the preceding claims **characterized in that** the sensor is a combined temperature-pressure sensor.

## Revendications

1. Senseur de température ayant une pointe du senseur (2) et un front (3), pour la mesure des températures des parois internes (4) d'un outil, en particulier d'un outil de moulage par injection, dans lequel la pointe du senseur (2) est faisable, par éroder du matériau au front (3) jusqu'à une profondeur d'usinage (L), pour adapter ultérieurement le front (3) à la paroi interne (4) de l'outil, comprenant deux fils thermoélectriques (6, 7) d'un couple thermoélectrique (8) où au moins un et préférentiellement les deux de ces fils thermoélectriques (6, 7) sont guidés chacun dans un forage (9, 10) au travers de la pointe du senseur (2) jusqu'au front (3) caractérise en se que chacun des fils thermoélectriques (6, 7) guidé au front (3) est soudé à la pointe du senseur (2) dans une zone de soudure (11) jusqu'à une profondeur supérieur à la profondeur d'usinage totale L derrière le front (3).

2. Senseur selon la revendication 1 caractérise en se que les deux fils thermoélectriques (6, 7) sont guidés au front (3).

3. Senseur selon la revendication 1 caractérise en se qu'exactement un fil thermoélectrique (7) est guidé au front (3) et l'autre fil thermoélectrique (6) est connecté à la pointe du senseur (2) à une autre position que le front (3).

4. Senseur selon la revendication 3 caractérise en se que la pointe du senseur (2) est fabriquée du même matériel que le fil thermoélectrique (6) pas guidé au front (3).

5. Senseur selon la revendication 1 ou 2 caractérise en se que la profondeur d'usinage (L) a une épaisseur d'au moins 0,2 mm, préférentiellement de 0,5 mm.

6. Senseur selon l'une des revendications 1 à 5 caractérise en se que le soudage a été effectué sans addition d'un matériel supplémentaire, de préférence au moyen de soudage par faisceau d'électrons ou par soudage par faisceau laser.

7. Senseur selon l'une des revendications précédentes caractérise en se que chacun des fils thermoélectriques (6, 7) guidé au front est soudé à la pointe du senseur (2) individuellement.

8. Senseur selon l'une des revendications précédentes caractérise en se que la marge des fils thermoélectriques (6, 7) dans les forages (9, 10) au front (3) est au maximum égal à 0,02 mm, de préférence au maximum égal à 0,01 mm, de diamètre D.

9. Senseur selon l'une des revendications précédentes caractérise en se qu'il a une protection de rotation pour le mécanisme d'insertion dans un outil (12).

10. Senseur selon l'une des revendications précédentes caractérise en se que le senseur est un senseur combiné de température et de pression.
